## Europäisches Patentamt
## European Patent Office
## Office européen des brevets

(19)

(11) Numéro de publication: **0 251 867**
**B1**

(12)

# FASCICULE DE BREVET EUROPEEN

(45) Date de publication du fascicule du brevet:
**14.03.90**

(51) Int. Cl.⁴: **G01P 5/18**, G01F 1/708

(21) Numéro de dépôt: **87401393.1**

(22) Date de dépôt: **19.06.87**

(54) **Dispositif de mesure de la vitesse d'un métal liquide en circulation à faible vitesse dans un conduit.**

(30) Priorité: **24.06.86 FR 8609096**

(43) Date de publication de la demande:
**07.01.88 Bulletin 88/1**

(45) Mention de la délivrance du brevet:
**14.03.90 Bulletin 90/11**

(84) Etats contractants désignés:
**DE GB IT**

(56) Documents cités:
**EP-A- 0 095 013**
**DE-A- 3 117 319**
**DE-A- 3 423 966**

**PATENT ABSTRACTS OF JAPAN,**
**vol. 8, no. 282 (P-323)[1719], 22 décembre 1984; &**
**JP-A-59 147 271**

(73) Titulaire: **NOVATOME, Tour Fiat 1, place de la Coupole,**
**F-92400 - Courbevoie(FR)**

(72) Inventeur: **Lebaud, Patrice, 60, rue Marie Fichel,**
**F-92140 Clamart(FR)**
Inventeur: **Vailland, Philippe, 5 bis rue Antoine Chantin,**
**F-75014 Paris(FR)**

(74) Mandataire: **Polus, Camille et al, c/o Cabinet**
**Lavoix 2, Place d'Estienne d'Orves, F-75441 Paris**
**Cedex 09(FR)**

ACTORUM AG

## Description

L'invention concerne un dispositif de mesure de la vitesse d'un métal liquide en circulation à faible vitesse dans un conduit ; un tel dispositif permet également des mesures du débit du métal liquide qui est proportionnel à sa vitesse.

Lorsqu'on utilise des métaux liquides tels que le sodium, par exemple comme fluide caloporteur, il peut être nécessaire de mesurer le débit de ces métaux liquides dans certaines parties de leur circuit d'utilisation. Pour effectuer ces mesures, on utilise généralement des débitmètres de type électromagnétique qui ont l'avantage d'être robustes et fiables. En revanche, ces débitmètres ne permettent pas de mesurer avec précision les débits lorsque la vitesse de circulation du métal liquide dans le conduit est faible, inférieure en général à 1 m/s. Dans le cas des réacteurs nucléaires à neutrons rapides dans lesquels on utilise le sodium liquide comme fluide caloporteur, il peut être nécessaire de mesurer avec précision de faibles débits, par exemple inférieurs à une fraction de mètre cube par heure se traduisant par une très faible vitesse de circulation du sodium.

Dans d'autres branches de l'industrie où l'on utilise du lithium liquide, on est également confronté à un problème difficile à résoudre, lorsqu'il s'agit de mesurer avec précision le débit de ce lithium. En effet, les débitmètres de type électromagnétique ne donnent pas des résultats de mesure satisfaisants, même pour des débits et vitesses du lithium liquide relativement importants.

On connaît un autre type d'appareil qui est bien adapté aux mesures de vitesses faibles de fluides conducteurs tels que des métaux liquides. De tels appareils comportent un moyen de chauffage du métal li quide permettant d'élever la température d'une fraction de ce métal liquide en circulation, au moins un moyen de détection du passage de la fraction de métal liquide échauffée dans au moins une zone déterminée du conduit et des moyens de mesure du temps de propagation de la fraction de métal échauffée, sur une distance prédéterminée, à l'intérieur du conduit. Grâce au dispositif de chauffage, on produit dans le fluide, un échauffement de durée brève, ce qui a pour effet d'élever la température d'une fraction du métal liquide en circulation dans le conduit. On détecte le passage de la fraction de métal échauffée en un point du conduit au moins et on détermine avec précision le temps de passage correspondant. On peut ainsi déterminer le temps de propagation de la fraction de métal échauffée entre deux points du conduit séparés par une distance déterminée, ces deux points étant constitués soit par le point où l'on réalise l'échauffement et un point de mesure, soit par deux points de mesure espacés le long du conduit.

La vitesse du fluide en circulation qui est égale au quotient de la distance déterminée dans la direction du conduit par l'intervalle de temps mesuré peut être déduite immédiatement de la mesure du temps de propagation.

On peut également déterminer le débit, soit par un calcul supplémentaire, soit par un changement d'échelle ou un étalonnage spécial.

Ces appareils présentent toutefois des inconvénients, en particulier dans le cas où le fluide en circulation est un métal liquide.

En effet, la détection du passage de la fraction échauffée du métal liquide est assurée par des thermocouples ou des thermistances qui présentent une inerte thermique non négligeable et qui en conséquence ne sont pas susceptibles d'avoir des temps de réponse suffisamment faibles pour une mise en œuvre optimale du procédé de mesure. Ces thermocouples ou thermistances doivent également être introduits dans le fluide, ce qui pose des problèmes techniques difficiles en ce qui concerne l'étanchéité, lorsque le fluide est un métal liquide à haute température ayant une forte réactivité ou agressivité chimique. De plus, il est très difficile de repérer de façon précise le passage de la fraction de métal liquide dont la température est maximale; en effet, l'élévation de température est relative à ne masse de métal liquide assez importante et qui a tendance à "s'étaler" dans la direction axiale, par suite de la conductibilité thermique élevée des métaux liquides.

En outre, on a proposé jusqu'ici des dispositifs où l'échauffement du métal liquide était assuré par un moyen de chauffage traversant la paroi du conduit et venant en contact direct avec le métal liquide. Une telle disposition du moyen de chauffage présente évidemment des inconvénients très importants dans le cas des métaux liquides.

On a également proposé dans le JP-A 59 147 271 un dispositif de mesure de la vitesse d'écoulement d'un fluide dans un conduit qui comporte un dispositif de chauffage du métal liquide extérieur au conduit et deux éléments thermosensibles disposés en contact avec la surface extérieure du conduit en aval du dispositif de chauffage et espacés l'un de l'autre suivant la longueur du conduit. Un tel dispositif de mesure ne présente pas une grande sensibilité dans la mesure où les éléments thermosensibles sont soumis à l'élévation de température à travers la paroi du conduit.

Le but de l'invention est donc de proposer un dispositif de mesure de la vitesse d'un métal liquide en circulation à faible vitesse dans un conduit, comportant, de manière connue, un moyen de chauffage du métal liquide disposé entièrement à l'extérieur du conduit permettant d'élever la température d'une fraction de ce métal liquide en circulation, au moins un liquide échauffée dans au moins une zone déterminée du conduit et des moyens de mesure du temps de propagation de la fraction de métal échauffée, sur une distance prédéterminée, à l'intérieur du conduit, ce dispositif sensible et précis permettant d'éviter les inconvénient rappelés ci-dessus.

Dans ce but, le moyen de détection est constitué par deux enroulements placés autour du conduit, l'un des enroulements ou enroulement primaire étant alimenté en courant alternatif et étant couplé au second enroulement ou enroulement secondaire par l'intermédiaire du métal liquide circulant dans le conduit, le couplage dépendant alors de la résistivité et donc de la température du métal liquide circulant dans le conduit.

De préférence, le moyen de chauffage du métal liquide est constitué par une bobine de chauffage à induction entourant le conduit.

Afin de bien faire comprendre l'invention, on va maintenant décrire, à titre d'exemples non limitatifs, en se référant aux figures jointes en annexe, plusieurs modes de réalisation d'un dispositif de mesure de vitesse suivant l'invention appliqué à la mesure de la vitesse et du débit d'un métal liquide tel que du sodium, en circulation dans une canalisation.

La figure 1 est une vue en coupe par un plan vertical de symétrie d'un dispositif de mesure selon l'invention et selon une première variante de réalisation.

La figure 2 est une représentation schématique des variations, en fonction du temps et suivant la longueur du conduit, de la température du métal liquide dont on mesure la vitesse en utilisant le dispositif représenté sur la figure 1.

La figure 3 est une représentation identique à celle de la figure 2 montrant une variante de traitement du signal de température.

La figure 4 est une vue en coupe par un plan vertical de symétrie d'un dispositif de mesure de vitesse selon l'invention et selon un second mode de réalisation.

La figure 5 est une représentation schématique des variations, en fonction du temps et suivant la longueur du conduit, de la température du métal liquide dont on mesure la vitesse, en utilisant le dispositif représenté sur la figure 4.

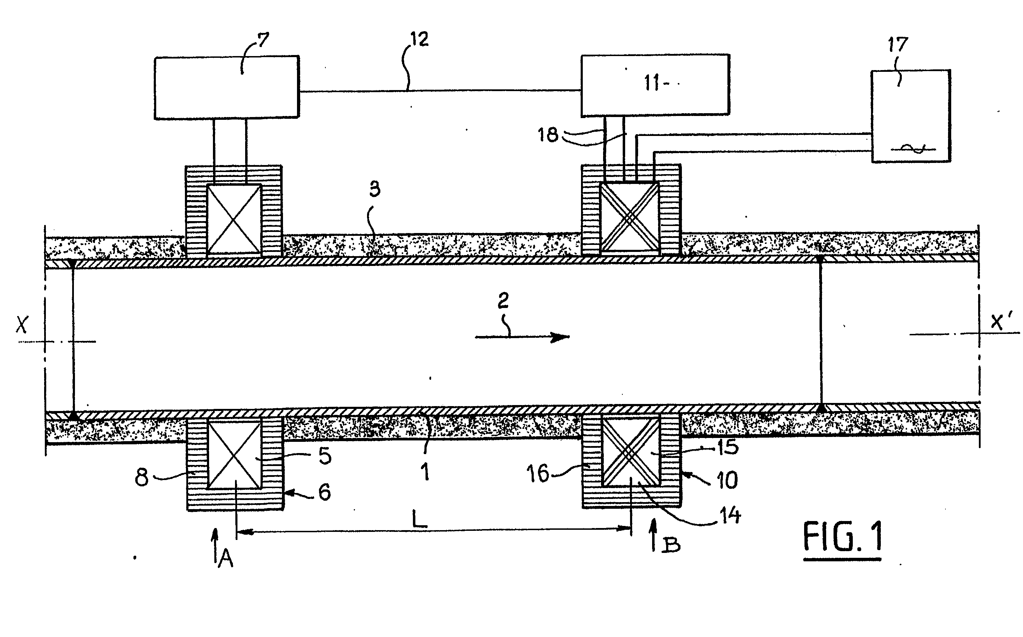

Sur la figure 1, on voit un conduit 1 à axe horizontal dans lequel circule du sodium liquide suivant la direction et le sens de la flèche 2. Le conduit 1 à axe horizontal XX' est entouré par un matériau calorifuge 3 permettant d'éviter des déperditions calorifiques trop importantes du sodium et la présence d'une surface à haute température dans l'installation où est montée la canalisation 1, par exemple un réacteur nucléaire à neutrons rapides.

Le dispositif de mesure de vitesse et de débit suivant l'invention comporte un moyen de chauffage du métal liquide désigné de manière générale par le repère 6, un moyen de détection 10 et un ensemble 11 de réception et de traitement des signaux en provenance du moyen de chauffage 6 et du moyen de détection 10.

Le moyen de chauffage 6 comporte un bobinage de chauffage par induction 5 alimenté par un générateur de courant alternatif 7, disposé à l'intérieur d'une enveloppe magnétique 8 et placé autour du conduit 1, de façon coaxiale par rapport à ce conduit.

Le générateur de courant 7 est susceptible de délivrer dans le bobinage 5, un courant alternatif impulsionnel à moyenne fréquence, cette fréquence étant comprise entre 500 Hz et 20 KHz. Ce générateur 7 est relié par un conducteur 12 à l'ensemble de traitement 11, pour délivrer un signal au moment où une impulsion est envoyée dans le bobinage 5.

L'enveloppe magnétique 8 agit à la manière d'un noyau permettant de concentrer le champ magnétique produit par le courant dans le bobinage 5 à l'intérieur du métal liquide circulant dans le conduit 1. Le dispositif 6 permet ainsi de chauffer par induction le métal liquide, pendant un temps bref correspondant à la durée de l'impulsion de courant émise par le générateur 7.

Le moyen de détection 10 est constitué par un second bobinage placé autour du conduit 1, à une distance $L$, suivant la direction axiale de ce conduit, du bobinage 5 de chauffage par induction.

Le bobinage du moyen de détection 10 comporte deux enroulements 14, 15 à fils imbriqués disposés à l'intérieur d'une enveloppe magnétique 16. L'enroulement 14, ou enroulement primaire, est relié à ses bornes à un moyen d'alimentation électrique 17 susceptible de débiter dans l'enroulement 14 un courant alternatif à amplitude et fréquence stables.

Le second enroulement 15, ou enroulement secondaire, est couplé à l'enroulement 14 par l'intermédiaire du métal liquide circulant dans le conduit 1, au niveau du moyen de détection 10. Une tension induite apparaît donc aux bornes de l'enroulement secondaire 15. Cette tension induite est envoyée par des conducteurs 18, à l'ensemble de traitement 11 où cette tension constitue un signal de mesure.

En effet, si la température du fluide qui circule dans le conduit 1 est constante ou si cette température varie lentement, la tension induite aux bornes de l'enroulement 15 est elle-même constante ou varie lentement, l'effet de couplage étant fonction de la résistivité du métal liquide qui évolue elle-même en fonction de la température et dans le même sens.

Dans le cas où le liquide en circulation dans le conduit 1, au niveau du moyen de détection 10, subit une élévation de température rapide et pendant un temps bref, la tension induite subit, pendant le même temps, une variation brève dans le sens de la montée, puis dans le sens de la descente, à partir de la tension constante correspondant à la température normale du métal liquide.

L'enregistrement de la tension induite au niveau de l'unité de traitement 11 permet donc de détecter le passage d'une portion de métal liquide échauffée, à l'intérieur du conduit, en face des enroulements 14 et 15.

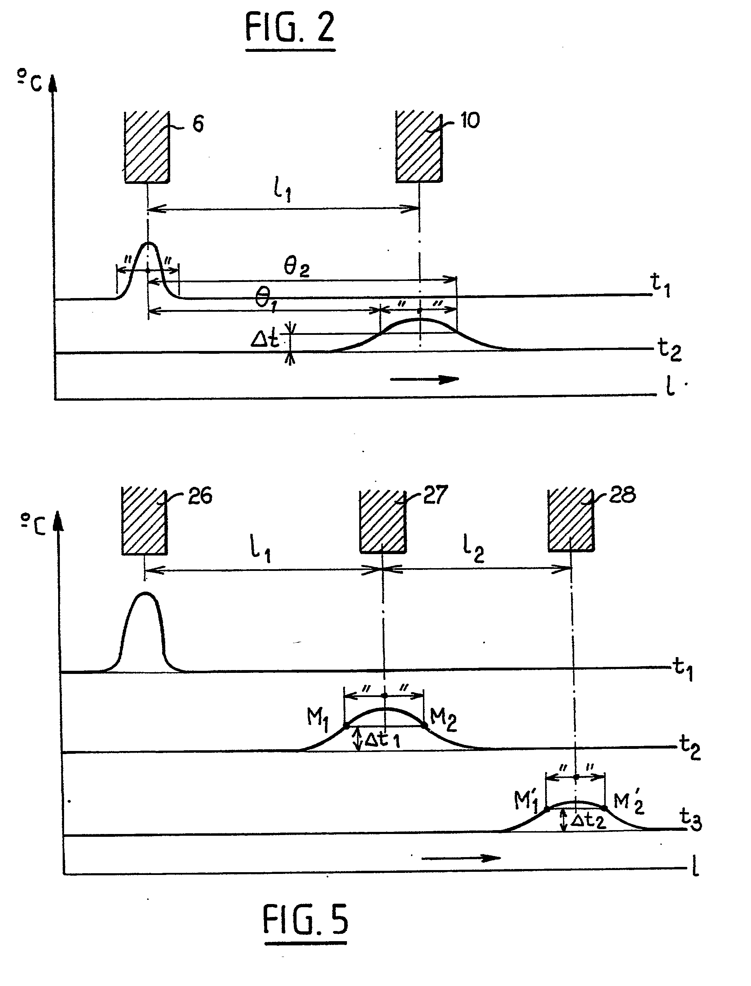

Sur la figure 2, on a représenté, de façon schématique, la disposition du moyen de chauffage 6 et du moyen de détection 10, suivant la direction axiale $\underline{1}$ du conduit 1.

On a également représenté sur cette figure, la répartition de la température du métal liquide suivant la direction axiale du conduit, à un instant t1 correspondant à la fin de l'émission d'une impulsion de chauffage par le moyen de chauffage 6 et à un instant t2 ultérieur à l'instant t1.

L'impulsion électrique fournie par le générateur 7 est transmise sous forme d'un signal image à l'ensemble de traitement 11, par l'intermédiaire du conducteur 12. Cette impulsion bien que très brève n'est pas instantanée et l'on prend comme instant d'émission de l'impulsion de chauffage correspondant à l'instant initial de la mesure, le milieu de l'intervalle de temps séparant le début de la fin de l'émission de l'impulsion électrique. Sur la courbe de température à l'instant t1 représentée sur la figure 2, l'instant initial ainsi défini correspond au maximum de la courbe de température.

L'impulsion de chauffage permet d'élever la température d'une fraction du métal liquide en circulation dans le conduit dont la longueur dépend de la vitesse du métal liquide en circulation et de la durée de l'impulsion de chauffage.

La longueur de la zone échauffée a tendance à augmenter au cours du temps, le métal liquide étant fortement conducteur.

L'instant t2 correspond au passage du maximum de la courbe d'échauffement du métal liquiede au niveau du détecteur 10.

La détection de ce passage du maximum de la courbe d'échauffement est réalisée en enregistrant la variation de la tension induite au niveau de l'ensemble de traitement 11.

Lorsque la tension varie par suite de l'arrivée de la zone échauffée en face du moyen de détection 10, on repère avec une très grande précision l'instant $\theta 1$ pour lequel la variation de tension induite correspond à une élévation de température $\Delta t$ fixée a priori et inférieure à l'élévation maximum de température prévue, lors de la montée en température, au moment du passage de la portion de métal liquide échauffée au niveau du moyen de détection 10. On mesure de la même façon l'instant $\theta 2$ compté à partir de l'instant initial, précédemment défini, pour lequel la tension induite atteint une valeur correspondant à la même fraction $\Delta t$ de l'élévation maximale de température, à la descente en température, lors du passage de la partie terminale de la portion de métal liquide échauffée. L'instant t2 est défini de façon très précise, comme la valeur moyenne des temps $\theta 1$ et $\theta 2$.

On a représenté, sur la figure 2, les points de la courbe d'échauffement correspondant à l'élévation de température $\Delta t$ par rapport à la valeur constante de la température du métal liquide et permettant de définir les instants de passage $\theta 1$ et $\theta 2$ au niveau du moyen de détection 10.

La vitesse du métal liquide est déterminée très facilement dans l'ensemble de traitement 11, en faisant le quotient de la distance $\underline{L}$ séparant les parties médianes des moyens 6 et 10 par le temps t2 - t1 (ou t2 si t1 est choisi comme un instant initial t1 = zéro).

La méthode de détermination de temps de passage qui vient d'être décrite et qui est représentée de façon conventionnelle sur la figure 2 ne nécessite pas un enregistrement continu de la tension induite dans le bobinage secondaire du moyen 10. Il suffit en effet de repérer les instants correspondant au passage d'une section du métal liquide à une température supérieure de $\Delta t$ à la température moyenne. Ce passage correspond à une tension induite d'une valeur déterminée.

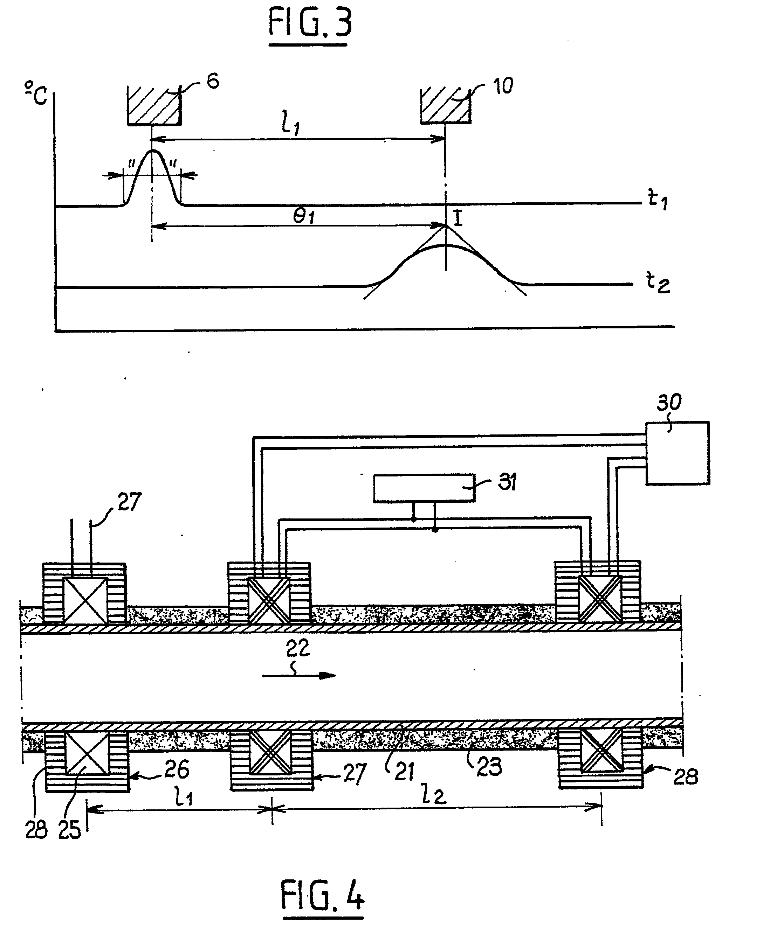

Sur la figure 3, on a représenté, de façon conventionnelle, une variante de traitement des signaux pour déterminer l'instant correspondant au passage du maximum de l'élévation de température.

La courbe d'élévation de température (et donc la courbe de variation de la tension induite) étant sensiblement symétrique, on peut déterminer son maximum en enregistrant la forme de cette courbe et en déterminant l'intersection $\underline{I}$ des deux tangentes 20 à cette courbe dont la pente est maximale. Cette détermination peut se faire très facilement grâce à un microprocesseur incorporé dans l'ensemble de traitement 11.

Comme précédemment, la vitesse du métal liquide sera déterminée en faisant le quotient de la distance $\underline{L}$ par le temps séparant l'instant d'émission de l'impulsion de chauffage, de l'instant de passage du maximum de la courbe d'élévation de température en face du moyen de détection 10, déterminé par la méthode des tangentes.

Sur les figures 4 et 5, on a représenté respectivement une variante du dispositif de mesure de vitesse et le diagramme des températures correspondant.

Sur la figure 4, on voit le conduit 21 dans lequel circule du métal liquide dans le sens et la direction de la flèche 22. Le conduit 21 est protégé par un calorifuge 23.

Le dispositif de mesure de la vitesse du métal liquide comporte, comme précédemment, un moyen de chauffage 26 constitué par une bobine 25 entourant le conduit 21, disposée dans une enveloppe magnétique 28 et alimentée en courant alterntif impulsionnel par un générateur de chauffage 27.

A la différence du dispositif représenté sur la figure 1 qui ne comprenait qu'un moyen de détection 10 constitué par deux enroulements imbriqués placés dans une enveloppe magnétique, le dispositif représenté sur la figure 4 comporte deux moyens de détection 27 et 28 répartis suivant la longueur du conduit 21.

Le premier moyen de détection 27 est placé à une distance $\ell 1$, dans la direction axiale, du moyen de chauffage 26 et le second moyen de détection 28 est à une distance $\ell 2$ du premier moyen de détection 27.

Les deux moyens de détection 27 et 28 sont identiques et constitués, comme le moyen de détection 10 représenté sur la figure 1, par deux enroulements imbriqués placés à l'intérieur d'un circuit magnétique, chacun des moyens de détection comportant un enroulement primaire et un enroulement secondaire.

Comme précédemment, le couplage de chaque enroulement primaire et de l'enroulement secondaire correspondant est assuré par le métal liquide circulant dans le conduit 21.

Les deux enroulements primaires des moyens de détection 27 et 28 sont reliés à un dispositif d'alimentation 31 permettant d'alimenter les enroulements primaires en courant alternatif.

Les enroulements secondaires aux bornes desquels on recueille une tension induite, lorsque les enroulements primaires sont alimentés en courant électrique, sont reliés l'un et l'autre à un ensemble de traitement de signaux 30 fournissant en sortie la mesure de vitesse du métal liquide dans le conduit 21.

Sur la figure 5, on voit la répartition des températures suivant la direction axiale du conduit 21 à trois instants différents t1, t2 et t3. L'instant t1 correspond à la fin de l'émission d'une impulsion de chauffage dans le moyen de chauffage 26.

L'instant t2 correspond au passage de la fraction de métal liquide qui a été échauffée en face du premier moyen de détection 27 et l'instant t3 correspond au passage de la fraction de métal échauffée en face du second moyen de détection 28.

L'instant t2 est déterminé comme précédemment en repérant les temps de passage d'une section du métal liquide à une température supérieure de $\Delta$ t1 à la température moyenne normale du flux de métal liquide, en face du premier moyen de détection 27.

L'instant t2 correspond au milieu de l'intervalle de temps séparant le passage des deux sections à une température supérieure de $\Delta$ t1 à la température moyenne normale du flux de métal liquide.

De la même façon, l'instant t3 correspond au milieu de l'intervalle de temps séparant le passage de deux sections du métal liquide à une température supérieure de $\Delta$ t2 à la température moyenne normale du métal liquide, en face du second moyen de détection 28.

La vitesse du métal liquide est égale au quotient de la longueur $\ell 2$ séparant les deux moyens de détection 27 et 28, par le temps t3 - t2 que met la fraction de métal liquide échauffée pour parcourir la longueur $\ell 2$.

Le passage de la zone échauffée en face des moyens de détection 27 et 28 est repéré comme précédemment par les variations de la tension induite dans les enroulements secondaires de ces moyens de détection.

L'instant de passage du maximum de l'échauffement est déterminé dans l'ensemble de traitement 30 qui fournit également en sortie la vitesse du sodium liquide en circulation dans le conduit 21.

Ce mode de réalisation a l'avantage de faire totalement abstraction de l'instant d'émission de l'impulsion de chauffage, pour la détermination de la vitesse.

Il est bien évident que les mesures de vitesse du sodium liquide en circulation permettent, comme précédemment, de déterminer très facilement le débit de ce sodium liquide.

Le dispositif suivant l'invention présente l'avantage de ne nécessiter aucun perçage du conduit, le chauffage du fluide en circulation aussi bien que la détection du passage de la zone échauffée se faisant entièrement depuis l'extérieur du conduit.

Le dispositif suivant l'invention a comme avantage supplémentaire de présenter un temps de réponse extrêmement court, une très grande précision et une très grande sensibilité de mesure.

L'invention ne se limite pas aux modes de réalisation qui ont été décrits.

C'est ainsi qu'on peut envisager d'utiliser des bobines distinctes pour constituer le primaire et le secondaire des moyens de détection.

Le courant d'alimentation du primaire des moyens de détection est adapté aux conditions de la mesure et dépend en particulier de la nature du métal liquide en circulation.

Les moyens de traitement des signaux peuvent être réalisés sous toute forme convenable et la sortie des informations concernant la vitesse ou le débit du métal liquide en circulation peut être présentée sous toute forme numérique ou non numérique.

Enfin, le dispositif suivant l'invention s'applique à la mesure de vitesse et de débit de tout métal liquide.

**Revendications**

1. Dispositif de mesure de la vitesse d'un métal liquide en circulation à faible vitesse dans un conduit (1, 21), comportant, de manière connue, un moyen de chauffage (6, 26) du métal liquide disposé entièrement à l'extérieur du conduit (1, 21) permettant d'élever la température d'une fraction de ce métal liquide en circulation, au moins un moyen de détection (10, 27, 28) du passage de la fraction de métal liquide échauffée dans au moins une zone déterminée du conduit (1, 21) et des moyens de mesure (11, 30) du temps de propagation de la fraction de métal échauffée sur une distance prédéterminée, à l'intérieur du conduit, caractérisé par le fait que le moyen de détection (10, 27, 28) est constitué par deux enroulements (14, 15) placés autour du conduit (1, 21), l'un des enroulements ou enroulement primaire (14) étant alimenté en courant alternatif et étant couplé au second enroulement (15) ou enroulement secondaire par l'intermédiaire du métal liquide circulant dans le conduit (1, 21), le couplage dépendant alors de la résistivité et donc de la température du métal liquide circulant dans le conduit (1, 21).

2. Dispositif de mesure suivant la revendication 1, caractérisé par le fait que les deux enroulements primaire et secondaire sont disposés avec leurs spires imbriquées pour constituer une bobine unique.

3. Dispositif de mesure suivant la revendication 2, caractérisé par le fait que les enroulements primaire et secondaire (14, 15) sont disposés dans une même enveloppe magnétique constituant un circuit magnétique (8) permettant de concentrer le champ magnétique produit par l'enroulement primaire (14) dans le métal liquide.

4. Dispositif de mesure suivant l'une quelconque des revendications 1 à 3, caractérisé par le fait qu'il comporte un seul moyen de détection (6), le temps de propagation du métal échauffé étant mesuré sur une distance correspondant à la distance séparant, dans la direction axiale du conduit, le moyen de chauffage (6) du moyen de détection (10).

5. Dispositif de mesure suivant l'une quelconque des revendications 1 à 3, caractérisé par le fait qu'il comporte deux moyens de détection (27, 28) constitués chacun par deux enroulement dont l'un est alimenté en courant alternatif, placés autour du conduit (21) et couplés par I liquide en circulation dans le conduit (21), les deux moyens de détection (27, 28) étant espacés suivant la direction axiale du conduit (21) et le temps de propagation du métal liquide échauffé étant mesuré pour une distance correspondant à la distance axiale séparant les deux moyens de détection (27, 28).

6. Dispositif de mesure suivant l'une quelconque des revendications 4 et 5, caractérisé par le fait qu'il comporte un ensemble de traitement (11, 30) comportant des moyens de détermination du temps de passage en face du moyen de détection (10, 27, 28), d'une section du métal liquide dont la température est supérieure d'une certaine quantité déterminée (Δt, Δt1, Δt2) inférieure à l'élévation maximale de température prévue de ce métal liquide et un moyen de détermination du milieu de l'intervalle de temps séparant deux passages successifs de la section du métal liquide dont la température est supérieure d'une quantité prédéterminée à la température moyenne du métal liquide en circulation.

7. Dispositif de mesure suivant l'une quelconque des revendications 1 à 5, caractérisé par le fait que l'ensemble de traitement (11, 30) comporte des moyens d'enregistrement de la caractéristique du métal liquide influencée par la température, des moyens d'enregistrement des variations de la température du métal liquide déterminées à partir des variations de la caractéristique physique et des moyens de détermination de l'intersection des tangentes de pente maximale à la courbe des variations en fonction du temps, de la température, pour déterminer l'instant de passage de la zone échauffée en face du ou des moyens de détection (10, 27, 28).

8. Dispositif de mesure suivant l'une quelconque des revendications 1 à 7, caractérisé par le fait que le moyen de chauffage (6, 26) est constitué par une bobine de chauffage par induction entourant le conduit (1, 21).

**Patentansprüche**

1. Vorrichtung zur Messung der Geschwindigkeit eines mit niedriger Geschwindigkeit in einer Leitung (1, 21) strömenden flüssigen Metalls, die in an sich bekannter Weise aufweist:

eine Heizung (6, 26) für das Flüssigmetall, die vollständig außerhalb der Leitung (1, 21) angeordnet ist und es ermöglicht die Temperatur eines Teils des strömenden Flüssigmetalls zu erhöhen, mindestens eine Vorrichtung (10, 27, 28) zur Erfassung des Durchströmens des Teils des erhitzten Flüssigmetalls durch mindestens einen bestimmten Bereich der Leitung (1, 21) und Meßvorrichtungen (11, 30) zur Messung der Durchlaufzeit des Teils des erhitzten Metalls über eine vorbestimmte Strecke im Inneren der Leitung, dadurch gekennzeichnet, daß die Erfassungsvorrichtung (10, 27, 28) aus zwei Wicklungen (14, 15) besteht, die um die Leitung (1, 21) angeordnet ist, wobei eine der Wicklungen bzw. die Primärwicklung (14) mit Wechselstrom gespeist ist und mit der zweiten Wicklung (15) bzw. Sekundärwicklung über das Flüssigmetall, das in der Leitung (1, 21) strömt, gekoppelt ist, wobei die Kopplung dem Widerstand und somit der Temperatur des in der Leitung (1, 21) strömenden Flüssigmetalls entspricht.

2. Vorrichtung nach Anspruch 1, dadurch gekennzeichnet, daß die beiden Primär- bzw. Sekundärwicklungen sich überlappend angeordnet sind, um eine einzige Spule zu bilden.

3. Vorrichtung nach Anspruch 2, dadurch gekennzeichnet, daß die Primär- und Sekundärwicklungen (14, 15) in ein und demselben magnetischen Feld angeordnet sind und einen Magnetkreis (8) bilden, der es erlaubt, das in der Primärwicklung (14) erzeugte Magnetfeld in dem Flüssigmetall zu konzentrieren.

4. Vorrichtung nach einem der Ansprüche 1 bis 3, dadurch gekennzeichnet, daß sie eine einzige Erfassungsvorrichtung (6) aufweist, wobei die Durchlaufzeit des erhitzten Metalls über eine Strecke gemessen wird, die dem Abstand entspricht, der in Axialrichtung der Leitung die Heizung (6) von der Erfassungsvorrichtung (10) trennt.

5. Vorrichtung nach einem der Ansprüche 1 bis 3, gekennzeichnet durch zwei Erfassungsvorrichtungen (27, 28), die jeweils aus zwei Wicklungen bestehen, von denen eine mit Wechselstrom gespeist ist, die um die Leitung (21) herum angeordnet sind und über das in der Leitung (21) zirkulierende Flüssigmetall gekoppelt sind, wobei die beiden Erfassungsvorrichtungen (27, 28) in Axialrichtung der Leitung (21) voneinander beabstandet angeordnet sind und die Durchlaufzeit des erhitzten Flüssigmetalls über eine Strecke gemessen wird, die dem axialen Abstand entspricht, der die beiden Erfassungsvorrichtungen (27, 28) trennt.

6. Vorrichtung nach einem der Ansprüche 4 und 5, gekennzeichnet durch eine Verarbeitungsanordnung (11, 30), mit einer Vorrichtung zur Bestimmung der Durchlaufzeit gegenüber der Erfassungsvorrichtung (10, 27, 28) eines Teils des Flüssigmetalls, dessen Temperatur höher als ein vorbestimmter Wert (Δt, Δt1, Δt2) ist, der kleiner als die maximale Temperaturerhöhung, die für das Flüssigmetall vorgesehen ist, ist und durch eine Vorrichtung zur Bestimmung der Mitte des Zeitintervalls, das die beiden aufeinanderfolgenden Durchläufe des Teils des Flüssigmetalls trennt, dessen Temperatur größer als ein vorbestimmter Temperaturwert gegenüber der mittleren Temperatur des zirkulierenden Flüssigmetalls ist.

7. Vorrichtung nach einem der Ansprüche 1 bis 5, dadurch gekennzeichnet, daß die Verarbeitungsanordnung (11, 30) aufweist: eine Vorrichtung zur Erfassung der Kenngröße des Flüssigmetalls, die von der Temperatur beeinflußt ist, Mittel zum Aufzeichnen der Temperaturänderung des Flüssigmetalls, die ausgehend von Änderungen der physikalischen Kenngröße erfaßt werden und Mittel zur Erfassung des Schnittpunktes der Tangenten der maximalen Neigung der Veränderungen der Temperatur in Funktion von der Zeit, um den Moment des Durchlaufes der erhitzten Zone an der Erfassungsvorrichtung (10, 27, 28) vorbei zu bestimmen.

8. Vorrichtung nach einem der Ansprüche 1 bis 7, dadurch gekennzeichnet, daß die Heizung (6, 26) aus einer Induktionsheizspule besteht, die die Leitung (1, 21) umgibt.

**Claims**

1. A device for measuring the velocity of a liquid metal flowing at low velocity in a pipe (1, 21), comprising, in known manner, means (6, 26) for heating the liquid metal, which are disposed totally outside the pipe (1, 21), making it possible to raise the temperature of a fraction of this circulating liquid metal, at least one means (10, 27, 28) for detecting the passage of the heated liquid metal fraction in at least one given region of the pipe (1, 21), and means (11, 30) for measuring the propagation time of the heated liquid metal fraction over a predetermined distance within the pipe, characterised in that the detecting means (10, 27, 28) consist of two windings (14, 15) disposed around the pipe (1, 21), one of the windings, or primary winding (14), being supplied with AC current and being coupled to the second winding, or secondary winding (15), by the liquid metal circulating in the pipe (1, 21), the coupling then depending on the resistivity and hence the temperature of the liquid metal circulating in the pipe (1, 21).

2. A measuring device according to claim 1, characterised in that the primary and secondary windings are disposed with their turns imbricated, so as to constitute a single coil.

3. A measuring device according to claim 2, characterised in that the primary and secondary windings (14, 15) are disposed in the same magnetic case constituting a magnetic circuit (8) permitting a concentration of the magnetic field produced by the primary winding (14) in the liquid metal.

4. A measuring device according to any one of claims 1 to 3, characterised in that it comprises a single detecting means (6), the propagation time of the heated metal being measured over a distance corresponding to the distance between the heating means (6) and the detecting means (10) in the axial direction of the pipe.

5. A measuring device according to any one of claims 1 to 3, characterised in that it comprises two detecting means (27, 28), each of which consists of two windings, one of which is supplied with AC current, disposed around the pipe (21) and coupled by the liquid metal circulating in the pipe (21), the two detecting means (27, 28) being spaced apart in the axial direction of the pipe (21), and the propagation time of the heated liquid metal being measured over a distance corresponding to the axial distance between the two detecting means (27, 28).

6. A measuring device according to claim 4 or 5, characterised in that it comprises a processing unit (11, 30) including means for determining the time of passage, in front of the detecting means (10, 27, 28), of a liquid metal section whose temperature is higher by a given quantity (Δt, Δt1, Δt2) which is less than the maximum temperature rise envisaged for this liquid metal, and means for determining the middle of the interval of time between two successive passages of the liquid metal section whose temperature is greater by a predetermined quantity than the mean temperature of the circulating liquid metal.

7. A measuring device according to any one of claims 1 to 5, characterised in that the processing unit (11, 30) comprises means for recording the characteristics of the liquid metal affected by the temperature, means for recording variations in the temperature of the liquid metal determined from variations in the physical characteristics, and means for determining the intersection of tangents of maximum slope to the curve of the variations in temperature as a function of time, so as to determine the moment when the heated region passes in front of the detecting means (10, 27, 28).

8. A measuring device according to any one of claims 1 to 7, characterised in that the heating means (6, 26) consist of an induction heating coil surrounding the pipe (1, 21).

EP 0 251 867 B1

FIG.1

# FIG. 2

# FIG. 5

## FIG.3

## FIG.4